# EUROPÄISCHE PATENTSCHRIFT

(11) **EP 3 362 679 B1**
(45) Veröffentlichungstag und Bekanntmachung des Hinweises auf die Patenterteilung: **10.06.2020**
(21) Anmeldenummer: 16781460.7
(22) Anmeldetag: 14.10.2016
(51) Int. Cl.: F03D 1/06

(54) **WINDENERGIEANLAGEN-ROTORBLATT UND VERFAHREN ZUM HERSTELLEN EINES WINDENERGIEANLAGEN-ROTORBLATTES**
WIND TURBINE ROTOR BLADE AND METHOD FOR PRODUCING A WIND TURBINE ROTOR BLADE
PALE DE ROTOR D'ÉOLIENNE ET PROCÉDÉ DE FABRICATION DE PALE DE ROTOR D'ÉOLIENNE

(30) Priorität: 14.10.2015 DE 102015117437
(43) Veröffentlichungstag der Anmeldung: 22.08.2018
(73) Patentinhaber: Wobben Properties GmbH, 26607 Aurich (DE)
(72) Erfinder: HOFFMANN, Alexander, 26721 Emden (DE)
(74) Vertreter: Eisenführ Speiser
(86) Internationale Anmeldenummer: PCT/EP2016/074654
(87) Internationale Veröffentlichungsnummer: WO 2017/064226

(56) Entgegenhaltungen:
- EP-A2- 2 108 819
- WO-A1-2014/072120
- DE-A1-102010 002 432
- DE-A1-102010 019 666
- DE-B- 1 045 810
- US-A1- 2015 226 180

## Beschreibung

Die vorliegende Erfindung betrifft ein Windenergieanlagen-Rotorblatt sowie ein Verfahren zum Herstellen eines Windenergieanlagen-Rotorblattes.

Rotorblätter von Windenergieanlagen werden typischerweise aus Faserverbundwerkstoffen wie beispielsweise GFK oder CFK hergestellt. Hierbei können beispielsweise zwei Halbschalen hergestellt und anschließend miteinander verklebt oder anderweitig aneinander befestigt werden. Die Halbschalen können beispielsweise in einem Vakuum-Injektionsverfahren oder Infusionsverfahren hergestellt werden.

Grundsätzlich werden im Bereich der Rotorblatttechnologie von Windenergieanlagen besondere Stabilitätsanforderungen an die nabenseitigen Endstücke von Rotorblättern gestellt, da diese für die Krafteinleitung vom Rotorblatt in eine Nabe der Windenergieanlage verantwortlich sind. Hier können besonders hohe statische und dynamische Belastungen auftreten.

WO 2014/072120 A1 zeigt ein Verfahren zum Herstellen von Halbzeugen für Windenergieanlagen-Rotorblätter. Das Halbzeug wird durch Wicklung eines harzgetränkten Geleges hergestellt. Zudem ist aus US 2015/0226180 A1 ein Rotorblatt einer Windenergieanlage bekannt.

In der prioritätsbegründenden deutschen Patentanmeldung wurden vom Deutschen Patent- und Markenamt als Stand der Technik die folgenden Dokumente genannt: DE 10 2010 019 666 A1, DE 29 21 152 C2, WO 2014/072120 A1, DE 10 2010 002 432 A1 und DE 1 045 810 A. Der Erfindung liegt die Aufgabe zugrunde, ein verbessertes Windenergieanlagen-Rotorblatt sowie ein verbessertes Verfahren zum Herstellen eines Windenergieanlagen-Rotorblattes vorzusehen.

Diese Aufgabe wird durch ein Windenergieanlagen-Rotorblatt nach Anspruch 1 sowie durch ein Verfahren zum Herstellen eines Windenergieanlagen-Rotorblattes gemäß Anspruch 6 gelöst.

Die Erfindung betrifft ein Windenergieanlagen-Rotorblatt mit einem Rotorblattabschnitt, der einen Rotorblattinnenabschnitt mit einem ersten Ende mit einer Mehrzahl von Befestigungseinheiten zur Befestigung an einer Nabe einer Windenergieanlage und einem zweiten Ende mit einem Flansch zur Befestigung weiterer Abschnitte des Windenergieanlagen-Rotorblattes aufweist. Der Innenblattabschnitt ist aus Polymerbeton hergestellt.

Gemäß einem weiteren Aspekt der vorliegenden Erfindung weist der Rotorblattabschnitt eine Mehrzahl von harzgetränkten und um den Innenrotorblattabschnitt gewickelten Faserverbundgelege oder Rovinge auf.

Gemäß einem weiteren Aspekt der vorliegenden Erfindung weist der Innenrotorblattabschnitt mindestens einen Gurt auf, welcher mittel der Faserverbundgelege eingewickelt ist.

Gemäß einem weiteren Aspekt der vorliegenden Erfindung ist der Innenrotorblattabschnitt innen hohl ausgestaltet und weist eine wellige Innenkontur auf.

Die Erfindung betrifft ebenfalls ein Verfahren zum Herstellen eines Windenergieanlagen-Rotorblattes. Ein Rotorblattabschnitt wird aus Polymerbeton hergestellt. Dieser aus Polymerbeton hergestellte Rotorblattabschnitt wird als Wickeldorn verwendet und harzgetränkte Faserverbundgelege werden um den Wickeldorn herumgewickelt.

Die Erfindung betrifft den Gedanken, zumindest Teile des Rotorblattes durch Wickeln herzustellen. Ein hierfür benötigter Wickeldorn ist aus Polymerbeton hergestellt und der Wickeldorn stellt einen Teil des fertigen Windenergieanlagen-Rotorblattes dar. Der Wickeldorn verbleibt somit in dem Windenergieanlagen-Rotorblatt. Damit erübrigt sich eine bisher benötigte Entformung eines bislang verwendeten teilbaren Stahldornes. Ferner kann das Gewicht des Rotorblattes reduziert werden. Die Verwendung von Polymerbeton verbessert die Recyclingfähigkeit des Rotorblattes.

Der Wickeldorn ist aus Polymerbeton gegossen oder geschleudert. Optional können hierbei Flansch mit vorgefertigten Gewindeeinsätzen oder komplette Metallflansche mit eingegossen oder eingeschleudert werden. Damit kann eine spätere mechanische Bearbeitung ganz oder teilweise entfallen. Zusätzlich dazu können weitere Anschlussgewindeeinsätze wie beispielsweise für Hinterkantensegmente mit eingegossen werden.

Die Verwendung eines Polymerbetonbauteils als Wickeldorn kann zu einer Reduzierung der Kosten sowie der Herstellungszeiten führen.

Weitere Ausgestaltungen der Erfindung sind Gegenstand der Unteransprüche.

Vorteil und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung eines Windenergieanlagen-Rotorblattabschnittes,
- Fig. 3: zeigt einen Querschnitt des Rotorblattabschnitts von Fig. 2,
- Fig. 4: zeigt eine schematische und perspektivische Darstellung des Rotorblattabschnitts von Fig. 2, und
- Fig. 5: zeigt einen schematischen Querschnitt eines Innenrotorblattabschnitts gemäß der Erfindung.

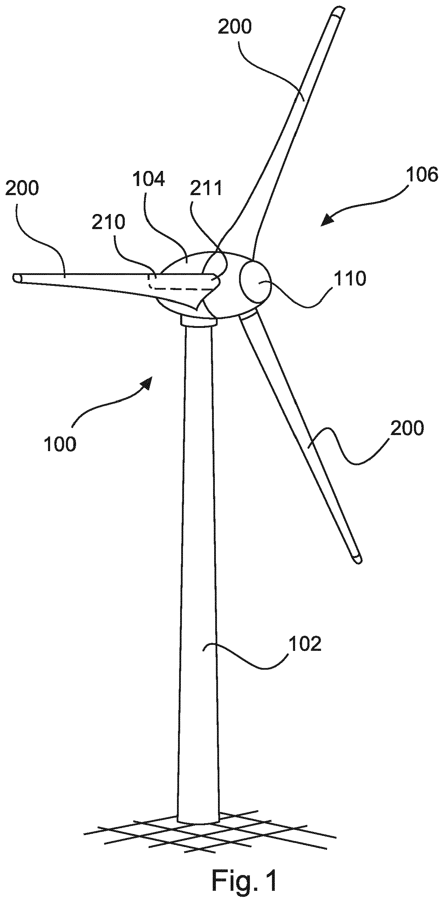

Fig. 1 zeigt eine Windenergieanlage 100 mit einem Turm 102 und einer Gondel 104. An der Gondel 104 ist ein Rotor 106 mit drei Rotorblättern 200 und einem Spinner 110 angeordnet. Der Rotor 106 wird in Betrieb durch den Wind in eine Drehbewegung versetzt und treibt dadurch einen Generator in der Gondel 104 an. Das Rotorblatt 200 gemäß der Erfindung weist einen Innenrotorblattabschnitt 210 auf.

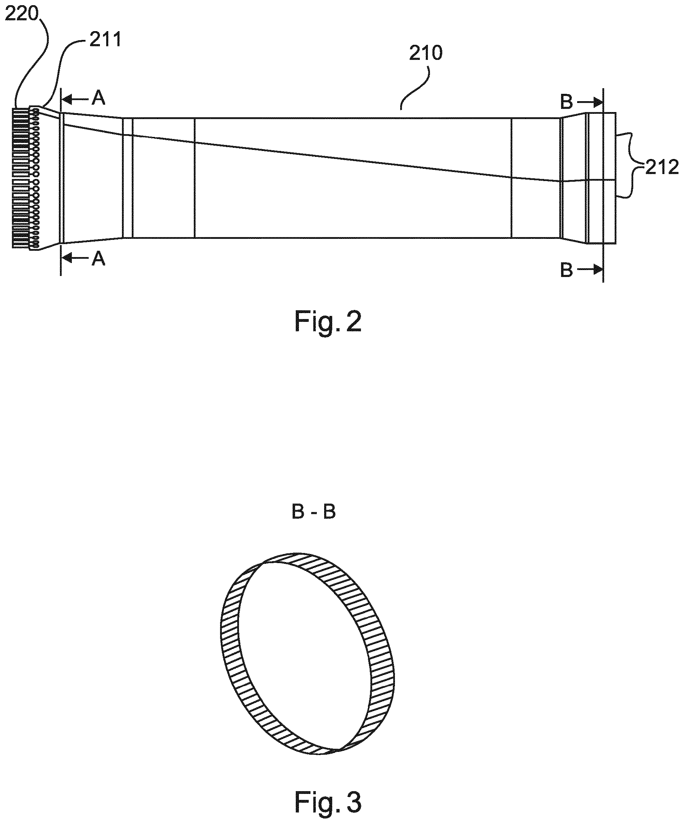

Fig. 2 zeigt eine schematische Darstellung eines Windenergieanlagen-Rotorblattabschnittes. In Fig. 2 ist ein Innenrotorblattabschnitt 210 gezeigt, welcher ein erstes Ende 211 optional mit einer Mehrzahl von Gewindebolzen 220 aufweist. Mittels der Gewindebolzen 220 kann das Rotorblatt 200 gemäß der Erfindung an einer Nabe der Windenergieanlage befestigt werden. Der Rotorblattabschnitt 210 weist ein zweites Ende 212 mit einem Flansch auf, an welchem weitere Abschnitte des Rotorblattes befestigt werden können.

Fig. 3 zeigt einen Querschnitt des Rotorblattabschnitts von Fig. 2. Der Querschnitt des Innenrotorblattabschnitts ist ellipsenförmig oder rund.

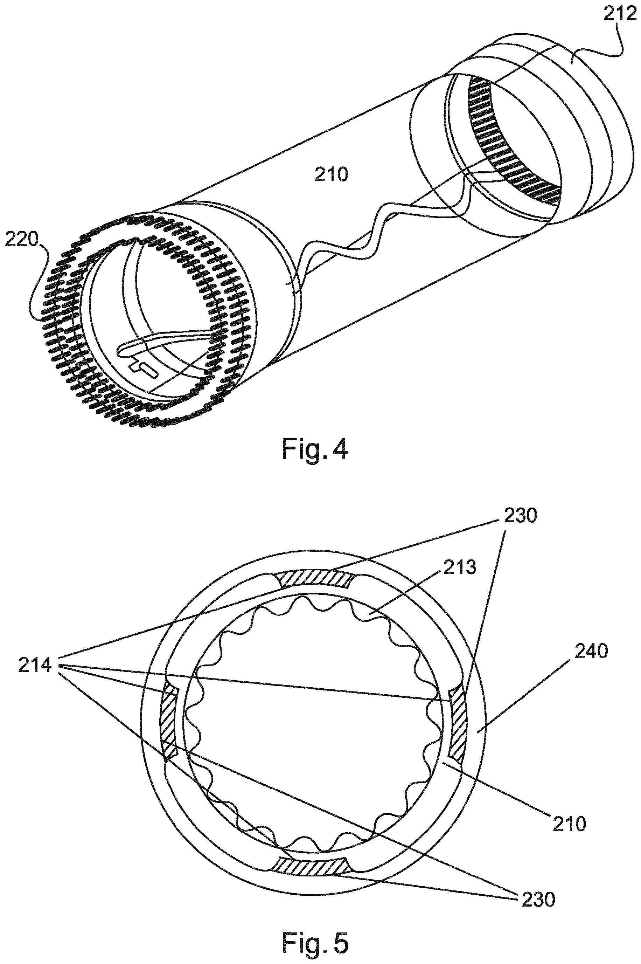

Fig. 4 zeigt eine schematische und perspektivische Darstellung des Rotorblattabschnitts von Fig. 2.

Gemäß der Erfindung wird der Innenrotorblattabschnitt 210 aus Polymerbeton hergestellt. Der Hauptbestandteil des Polymerbetons kann ein Gemisch aus getrocknetem Sand unterschiedlicher Körnung und/oder feingemahlenem oder pulverförmigen Quarzen und einem bindendem Kunstharz darstellen. Ferner können größere Steine, beispielsweise auf Granitbasis, ebenfalls in dem Polymerbeton vorgesehen sein. Durch Beimischung von Kurzfasern aus Glas oder Karbon können die Festigkeitseigenschaften des Polymerbetons ausgewählt werden. Hierbei sollte eine gute Packung und Verdichtung der Füllstoffe erreicht werden.

Gemäß einem Aspekt der vorliegenden Erfindung kann der Polymerbeton aus 50% grobem Sand (Äquivalentdurchmesser 0,63 bis 2 mm), 15% Mittelsand (Äquivalentdurchmesser 0,2 - 0,63 mm), 10% Quarzmehl (Äquivalentdurchmesser 0,063 bis 0,2 mm), 5% Kurzfaser (Glasfaser), Faserlänge ca. 20 bis 30 mm (Filamentdurchmesser und Schlichte ca. 19µm) und 20% (Harz-/Härtergemisch) Kunstharz z.B. Zwei-Komponentenharzsystem auf Epoxidharzbasis oder thermoplastische Harzsysteme oder Härter hergestellt werden. Andere prozentuale Verteilungen sind ebenfalls möglich.

Aus diesen Bestandteilen kann ein Innenrotorblattabschnitt 210 hergestellt werden. Dieser Innenrotorblattabschnitt kann als ein Wickelkern oder Wickeldorn bei der Herstellung eines Rotorblattes einer Windenergieanlage verwendet werden. Dieser Wickelkern oder Wickeldorn kann mehrere strukturelle Aufgaben (wie beispielsweise eine Beulstütze) während des Betriebs des Rotorblattes übernehmen. Der Wickeldorn verbleibt somit in dem Rotorblatt der Windenergieanlage.

Gemäß einem Aspekt der vorliegenden Erfindung können an den Enden des Innenrotorabschnitts 210 Flansche 211, 212 vorgesehen sein. Diese Flansche können in dem Polymerbeton eingegossen werden.

Zur Herstelllung eines Rotorblatts einer Windenergieanlage gemäß der Erfindung wird somit ein Innenrotorblattabschnitt aus Polymerbeton als Wickeldorn verwendet. Dies erfolgt durch Gießen oder Schleudern eines Polymerbetons, der damit hergestellte Abschnitt wird als Wickeldornverwendet und Faserverbundgelege oder Rovinge können in Harz getränkt und anschließend um den Wickeldorn herumgewickelt werden, um ein Halbzeug herzustellen, das Teil eines Rotorblattes wird.

Gemäß der Erfindung können beispielsweise Flansche und Rotorblattanschlüsse ebenfalls direkt mit eingewickelt werden.

Polymerbeton ist vorteilhaft hinsichtlich der hohen Chemikalienresistenz, der Dichtigkeit, der Alterungsbeständigkeit, der Dämpfungseigenschaften und seiner dynamischen Festigkeit.

Gemäß der Erfindung wird durch Verwendung eines Innenrotorblattabschnitts als Wickelkern aus Polymerbeton mit bereits eingearbeiteten Flanschen eine mechanische Nachbearbeitung reduziert. Ferner können günstigere Füllstoffe ermöglicht werden. Des Weiteren ist auch eine Gewichtsreduzierung durch einen effizienteren Materialeinsatz möglich.

Gemäß der Erfindung ist der Innenrotorblattabschnitt aus Polymerbeton hergestellt. Dieser kann unter rütteln gegossen oder geschleudert (Schleuderbeton) werden. Der Rotorblattabschnitt verbleibt nach der Herstellung des Rotorblattes in dem Rotorblatt und kann optional als Beulstütze dienen. Ferner kann der Rotorblattabschnitt als Wickeldorn verwendet werden.

Gemäß einem Aspekt der vorliegenden Erfindung können die Innenflächen glatt ausgestaltet sein, Rippen aufweisen oder wellig in Umfang und Längsrichtung ausgestaltet sein.

Gemäß einem Aspekt der vorliegenden Erfindung weist der Rotorblattabschnitt vorgefertigte Flansche aus Stahl, GFK, CFK, Stahlinserts oder metallische Gewindehülsen auf. Diese können insbesondere bei der Herstellung des Innenrotorblattabschnittes mit eingegossen oder mit eingeschleudert werden.

Gemäß einem weiteren Aspekt der vorliegenden Erfindung können Innen oder Außen Haupt- oder Nebengurte (Saugseite, Druckseite, Vorderseite und Endkante) mit eingewickelt werden. Beispielsweise können in der Kontur des Innenrotorblattabschnitts Vertiefungen mit eingegossen bzw. vorgesehen sein. Durch das Vorsehen der Vertiefungen in der Außenkontur des Innenrotorblattabschnitts können Bauteile ein- bzw. aufgeklebt werden, dass eine glatte Außenkontur zum Aufwickeln von Verstärkungsmaterial vorhanden ist.

Fig. 5 zeigt einen schematischen Querschnitt eines Innenrotorblattabschnitts gemäß der Erfindung. Ein Innenrotorblattabschnitt 210 aus Polymer gemäß der Erfindung ist insbesondere hohl ausgestaltet und kann im Inneren im Querschnitt eine wellige Innenkontur 213 aufweisen. Der Polymerbeton des Innenrotorblattabschnitts 210 kann optional Vertiefungen 214 aufweisen, in welche Gurte 230 platziert werden können. Optional kann der Innenrotorblattabschnitt sowie die Gurte 230 weiter durch ein Faserverbundgelege 240, welches harzgetränkt ist, umwickelt werden.

## Patentansprüche

1. Windenergieanlagen-Rotorblatt mit
einem Rotorblattabschnitt (210), der einen Innenrotorblattabschnitt (210) mit einem ersten Ende (211) mit einer Mehrzahl von Befestigungseinheiten (220) zur Befestigung an einer Nabe einer Windenergieanlage und einem zweiten Ende (212) mit einem Flansch zur Befestigung weiterer Abschnitte des Windenergieanlagen-Rotorblattes aufweist,
wobei der Innenrotorblattabschnitt (210) aus Polymerbeton hergestellt ist,
wobei der Innenrotorblattabschnitt (210) eine Mehrzahl von harzgetränkten und um den Innenrotorblattabschnitt (210) gewickelten Faserverbundgeiegen oder Rovingen (240) aufweist,
wobei der Innenrotorblattabschnitt (210) als Wickeldorn ausgestaltet ist und durch Gießen oder Schleudern eines Polymerbetons hergestellt ist.

2. Windenergieanlagen-Rotorblatt nach Anspruch 1, wobei
der Innenrotorblattabschnitt (210) mindestens einen Gurt (230) aufweist, welcher mittels der Faserverbundgelege (240) eingewickelt ist.

3. Windenergieanlagen-Rotorblatt nach einem der Ansprüche 1 oder 2, wobei
der Innenrotorblattabschnitt (210) innen hohl ausgestaltet ist und eine wellige Innenkontur (230) aufweist.

4. Windenergieanlagen-Rotorblatt nach einem der Ansprüche 1 bis 3,
wobei die gewickelten Faserverbundgelege (240) um den Wickeldorn gewickelt sind.

5. Windenergieanlage, mit
einem Windenergieanlagen-Rotorblatt nach einem der Ansprüche 1 bis 4.

6. Verfahren zum Herstellen eines Windenergieanlagen-Rotorblattes, mit den Schritten:
Herstellen eines Innenrotorblattabschnitts (210) durch Gießen oder Schleudern von Polymerbeton,
Verwenden des Innenrotorblattabschnitts (210) als Wickeldorn,
Umwickeln des Wickeldorns mit harzgetränkten Faserverbundgelegen oder Rovingen (240).

## Claims

1. A wind-turbine rotor blade having
a rotor blade portion (210) which comprises an inner rotor blade portion (210) with a first end (211) having a plurality of fastening units (220) for fastening to a hub of a wind turbine and a second end (212) having a flange for fastening further portions of the wind-turbine rotor blade,
wherein the inner rotor blade portion (210) is produced from polymer concrete,
wherein the inner rotor blade portion (210) has a plurality of resin-impregnated fiber-composite laid scrims or rovings (240) which are wound around the inner rotor blade portion (210),
wherein the inner rotor blade portion (210) serves as a winding mandrel and is produced by casting or spinning polymer concrete.,

2. The wind-turbine rotor blade as claimed in claim 1, wherein
the inner rotor blade portion (210) has at least one spar cap (230) which is wound in by means of the fiber-composite laid scrims (240).

3. The wind-turbine rotor blade as claimed in either of claims 1 and 2, wherein
the inner rotor blade portion (210) is designed to be hollow on the inside and has a corrugated inner contour (230).

4. The wind-turbine rotor blade as claimed in one of claims 1 to 3,
wherein the wound fiber-composite laid scrims (240) are wound around the winding mandrel.

5. A wind-turbine having
a wind-turbine rotor blade as claimed in one of claims 1 to 4.

6. A method for producing a wind-turbine rotor blade, comprising the following steps:
producing an inner rotor blade portion (210) by casting or spinning polymer concrete,
using the inner rotor blade portion (210) as a winding mandrel,
winding resin-impregnated fiber-composite laid scrims or rovings (240) around the winding mandrel.

## Revendications

1. Pale de rotor d'éolienne comprenant
une section de pale de rotor (210), qui présente une section de pale de rotor intérieure (210) avec une première extrémité (211) avec une multitude d'unités de fixation (220) destinées à être fixées au niveau d'un moyeu d'une éolienne et une seconde extrémité (212) avec une bride servant à fixer d'autres sections de la pale de rotor d'éolienne,
dans laquelle la section de pale de rotor intérieure (210) est fabriquée en béton polymère,
dans laquelle la section de pale de rotor intérieure (210) présente une multitude de non-tissés composites renforcés par des fibres ou des rovings (240) imprégnés de résine et enroulés autour de la section de pale de rotor intérieure (210),
dans laquelle la section de pale de rotor intérieure (210) est configurée en tant qu'un mandrin d'enroulement et est fabriquée par coulée ou projection d'un béton polymère.

2. Pale de rotor d'éolienne selon la revendication 1, dans laquelle
la section de pale de rotor intérieure (210) présente au moins une sangle (230), laquelle est enveloppée au moyen des non-tissés composites renforcés par des fibres (240).

3. Pale de rotor d'éolienne selon l'une quelconque des revendications 1 ou 2, dans laquelle
la section de pale de rotor intérieur (210) est configurée de manière creuse à l'intérieur et présente un contour intérieur (230) ondulé.

4. Pale de rotor d'éolienne selon l'une quelconque des revendications 1 à 3,
dans laquelle les non-tissés composites renforcés par des fibres (240) enroulés sont enroulés autour du mandrin d'enroulement.

5. Eolienne comprenant
une pale de rotor d'éolienne selon l'une quelconque des revendications 1 à 4.

6. Procédé servant à fabriquer une pale de rotor d'éolienne, comprenant les étapes suivantes :
fabrication d'une section de pale de rotor intérieure (210) par coulée ou projection de béton polymère,
utilisation de la section de pale de rotor intérieure (210) en tant que mandrin d'enroulement,
enroulement du mandrin d'enroulement avec des non-tissés composites renforcés par des fibres ou des rovings (240) imprégnés de résine.
